# EUROPEAN PATENT APPLICATION

(11) **EP 3 989 156 A1**
(43) Date of publication of application: **27.04.2022**
(21) Application number: 20203387.4
(22) Date of filing: 22.10.2020
(51) Int. Cl.: G06Q 50/06

(54) **A SYSTEM AND METHOD FOR MANAGING DIFFERENT APPLICATIONS USING CLOUD SERVICES**

(71) Applicant: VITO NV, 2400 Mol (BE)
(72) Inventor: RYNDERS, Luc Valère Jozef, B-2400 Mol (BE); CLAESSENS, Svens Willem M., B-2400 Mol (BE)
(74) Representative: V.O.

(57) **Abstract**

A system and method for managing different applications related to energy flexibility management using cloud services. A platform is provided configured to store and concurrently execute a plurality of applications related to energy management, wherein each application of the plurality of applications comprises one or more modules for processing data. Further, a data store is provided communicatively coupled to the platform wherein each of the plurality of applications has access to the data store. The data store is configured to store data which the plurality of applications use for operation. Further, a configuration unit is provided communicatively coupled to the platform and configured to enable configuration of parameters of the plurality of applications. The data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

## Description

### FIELD OF THE INVENTION

The invention relates to a method and system for managing different applications related to energy management using cloud services. The invention also relates to a computer program product and a non-transitory computer readable storage medium. Further, the invention relates to a use of a system.

### BACKGROUND TO THE INVENTION

The number of private and public energy networks are expected to grow vastly in the future. The energy networks, such as thermal networks, may require controllers requiring a large number of input data from different hardware solutions. An intelligent controller may for instance be provided which is configured to monitor sensory data and based on the input data take action, in order to improve one or more controlled parameters.

For example, a collective or centralized heat production network can be intelligently controlled or managed in order to find a balance between heat production, consumption and storage and to make use of the available storage capacity in communities, districts and even cities. By reducing the consumed energy, the total emission and production costs can also be reduced. The peak production may be an expensive energy cost in operating a heat network. Often, heat network operators need to have multiple standby heat production installations to cover instantaneous heat demand. By combining historic information on heat demand with the buffer thermal capacity of buildings itself and with an adequate weather forecast, heating consumption can be shifted in time per building to reduce those peaks and in the meantime keep the same comfort level for every habitant. The result of avoiding peaks is a reduction in capex investment on the number of standby heat production installations and the optimal use of existing production capacity which also lowers the operating production cost. Applications may be configured to adequately control system parameters in order to reduce the heat production cost, preferably without loss of comfort for the inhabitants. Various other kind of applications are known.

Management of different applications is typically inefficient. Different hardware implementations and protocols may be employed, resulting in a challenging maintenance of current running applications and development of new applications. Furthermore, different applications often lack the possibility of adequately working together.

There is a need to facilitate the development and deployment of energy applications. It is desired that the applications are easily applicable on various domains (e.g. existing building, new building, district, one or more streets, city, etc.). This desire becomes even more important with the development of 'smart cities'.

### SUMMARY OF THE INVENTION

It is an object of the invention to provide for a method and a system that obviates at least one of the above mentioned drawbacks.

Additionally or alternatively, it is an object of the invention to improve managing different applications related to energy management.

Additionally or alternatively, it is an object of the invention to effectively manage different applications running in parallel on the same platform.

Thereto, the invention provides for a system for managing different applications related to energy management using cloud services, wherein the system includes: a platform configured to store and concurrently execute a plurality of applications related to energy management, wherein each application of the plurality of applications comprises one or more modules for processing data; a data store communicatively coupled to the platform wherein each of the plurality of applications has access to the data store, wherein the data store is configured to store data which the plurality of applications use for operation; a configuration unit communicatively coupled to the platform and configured to enable configuration of parameters of the plurality of applications; wherein the data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

The platform can be configured to run various applications related to energy management in parallel. Each application may have access to the data store (e.g. datalake) in which relevant data is stored which the respective application may require to operate. The different applications may require different data stored in the data store. Further, the applications may each have one or more modules for processing data. The configuration unit may be a portal configured to provide an interface to enable a user to easily configure one or more parameters of the different applications. Applications belonging to the same environment are grouped and are effectively allowed to share data. This allows in more efficient management of different aspects of one environment using different applications.

The platform may facilitate deployment of various energy management solutions. The way the platform handles multiple applications may make integration of third party applications or internet of things solutions and services easier.

An exemplary application is related to district heating. The application may for instance be configured to operate as a network controller. Optionally, the controller employs a machine learning model configured to receive sensory data as input, and provide control parameters as an output. The controller may be an artificial intelligence based controller for district heating networks which achieves operational optimization through active demand side management. The controller may provide for different control strategies, such as for instance peak shaving, electricity market interaction, cell balancing, etc.

The application may for instance include different modules, for instance relating to forecasting (e.g. using artificial intelligence or machine learning models), day-ahead scheduling and optimization, real time tracking and optimization of control parameters, wireless communication of control signals, cloud based data processing and/or visualization, etc.

Optionally, the platform includes a communicative interface unit for enabling communication of one or more modules of the first application with one or more modules of at least one further application of the plurality of applications belonging to the same environment as the first application.

The communicative interface unit may enable data streams between different applications belonging to the same environment. Advantageously, the communicative interface allows for sharing of configurations, data and even processing steps. Also, it becomes easier to further build on existing infrastructures. The applications may be compatible with each other. In some examples, first a compatibility check is performed by the communicative interface in order to determine whether the required communication streams are valid. Optionally, the communicative interface is configured to perform a handshaking step. The handshaking step may be an automated process of negotiation between two or more applications through the exchange of information that establishes the employed protocols of a communication link. The handshaking step may be performed at the start of execution of individual applications.

Optionally, the communicative interface is configured to provide an indirect communication between the plurality of applications. Alternatively, the communication interface may be configured to provide a direct communication between the plurality of applications.

Optionally, the applications may be configured to interact directly with the data store, for example not through a communicative interface.

Optionally, the communicative interface is configured to provide a direct communication between the plurality of applications and the data store.

Optionally, at least a first module of the first application is accessible by the at least one further application of the plurality of applications belonging to the same environment as the first application.

In this way, dependencies can be created. Some applications may have module dependencies which are present in other applications. The platform may be configured to pause an application when one of the applications on which it depends is paused, interrupted or stopped. By using module dependencies, the efficiency of the management can be improved. Also, the risk of incompatibilities can be reduced.

Alternatively, a copy of the module is made by the further applications, and these copies run locally.

Optionally, modules of the plurality of applications define data streams, wherein a first data stream of the first application is accessible by the at least one further application of the plurality of applications belonging to the same environment as the first application.

A data stream of a first application may be in direct or indirect communication with a data stream of at least one further application different from the first application, but belonging to the same environment. In this way, sharing of data and processing operations can be better shared between different applications. The different application can run more efficiently in parallel.

Optionally, at least the first application and the at least one further application of the plurality of applications belonging to the same environment as the first application have communicatively coupled data streams.

Optionally, the communicatively coupled data streams are indirectly coupled.

Optionally, the data streams are communicatively coupled through the data store.

This provides important advantages, since the modules of the applications can become interchangeable and pluggable. In some examples, the communication is only allowed to occur through the data store. As a result, there may be no dependency between modules of different applications (in the same environment). In the case of direct coupling, a whole chain may fail if one module fails. This can be prevented by allowing communication of data streams through the data store.

Advantageously, development and maintenance of applications may be made easier in this way. The system can also become less prone to errors or unexpected behaviour.

Alternatively, it is also envisaged that the coupling may be direct (not through the data lake).

Optionally, the first module of the first application is re-usable by the at least one further application of the plurality of applications belonging to the same environment as the first application.

Often, applications include same or similar modules. In this way, generalized modules can be shared and accessible by other application in the same environment.

Optionally, the system comprises a data management unit coupled to the data store, wherein the data management unit is configured to process data access requests from the plurality of applications based on data management contracts associated to each of the plurality of applications.

Data contracts may be defined to which the applications must comply. These data contracts can enable to verify whether exchange information between applications through the data lake is allowed and envisaged.

Optionally, the data store is configured to provide concurrent access of each of the plurality of applications to data stored therein.

Optionally, the data store is integrated in the platform.

Optionally, the configuration unit is configured to provide a user interface enabling users to configure parameters of at least a subset of the plurality of applications.

Optionally, the applications relate to at least one of a heating, ventilation, and/or air conditioning application, a temperature management application, a lighting application, a control of electronic and/or electric devices application, a control of storage devices application, a charging of electric vehicles application, an energy conversion application, a thermal energy storage application, or an electrical energy storage application.

Optionally, at least one application is configured to control a system having devices consuming hot or cold thermal energy and for consuming or generating electric power supplied by an electricity distribution grid, the electricity distribution grid having constraints and target objectives, at least one device having an internal controller for controlling the use of the hot or cold thermal energy and for receiving parameters as input to the internal controller, wherein the application is configured to:
retrofitting an external controller wherein at least one parameter is accessible to the external controller, the retrofitted external controller manipulating the at least one parameter and
supplying the manipulated parameter to the internal controller to alter the behaviour of the at least one device to meet at least in part the constraints and target objectives of the electricity distribution grid,
wherein the at least one manipulated parameter is an accessible external data flow, an accessible external channel, or an accessible external sensor output whose manipulation steers the internal controller.

Optionally, the constraints and target objectives of the electricity distribution grid include any of minimization of losses, limitations in the capacity of the grid, voltage, frequency and current stabilization or similar.

Optionally, the constraints and target objectives of the electricity distribution grid are updated dynamically.

Optionally, the updated constraints and target objectives are for local distribution grid level RES curtailment mitigation in a grid secure manner, system RES curtailment mitigation, excess RES absorption maximization using distribution grid connected flexibility within the local grid constraints, or balancing services using distribution grid connected flexibility within the local grid constraints.

Optionally, the external controller learns responses of the at least one device to the manipulated parameter.

Optionally, a drift in the at least one parameter is tracked.

According to an aspect, the invention provides for a computer-implemented method for managing different applications related to energy management using cloud services, wherein the method comprises: providing a platform for storing and concurrently executing a plurality of applications related to energy management, wherein each application of the plurality of applications comprises one or more modules for processing data; providing a data store communicatively coupled to the platform wherein each of the plurality of applications has access to the data store, wherein the data store is configured to store data which the plurality of applications use for operation; providing a configuration unit configured communicatively coupled to the platform and configured to enable configuration of parameters of the plurality of applications, wherein the data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

Sharing data between the different applications (same environment) may be performed in different ways. The modules of the applications may define data streams. One data stream of a first application may communicate with data streams in other applications. This can be handled efficiently and effectively by using the data store for managing the data communication.

Optionally, one or more modules in a first application may be re-used in second application, different from the first application. In some examples, the re-used module is copied. Optionally, a communication is provided between the different applications, so that for instance data from a first application can be sent to one or more modules of a different second application to be processed, wherein the output may be sent back to the first application.

The platform may provide for communicative interfaces between the different applications in the same environment being executed in parallel. The data streams between the different applications can be handled by the platform.

According to an aspect, the invention provides for a non-transitory computer readable storage medium embodying a program executable in a computing device for provisioning cloud services in a cloud computing environment, the program comprising program code for carrying out the method according to the invention.

According to an aspect, the invention provides for a use of the system according to the invention, for managing different applications related to energy management using cloud services.

It will be appreciated that the data store may be a datalake, database, cloud storage system, or the like.

It will be appreciated that in some examples the same environment may imply a same subscription (cf. Microsoft Azure), a same organization (cf. Amazon Web Services), or the like.

It will be appreciated that the system and method according to the invention can be used for managing multiple applications related to various types of energy management. In some examples energy flexibility applications are managed. For instance, the application may relate to peak load control & shifting for providing smart heat grids, cities and/or industry. In some examples, the application relates to capacity management and balancing for instance for e-mobility. In some examples, the application relates to market coupling for instance for energy communities. In some examples, the application relates to monitoring and reporting for instance for energy optimization.

It will be appreciated that any of the aspects, features and options described in view of the system apply equally to the method and the described medium, computer program product and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
- Fig. 1: shows a schematic diagram of a system;
- Fig. 2: shows a schematic diagram of a system;
- Fig. 3: shows a schematic diagram of a system;
- Fig. 4: shows a schematic diagram of a system; and
- Fig. 5: shows a schematic diagram of a method.

### DETAILED DESCRIPTION

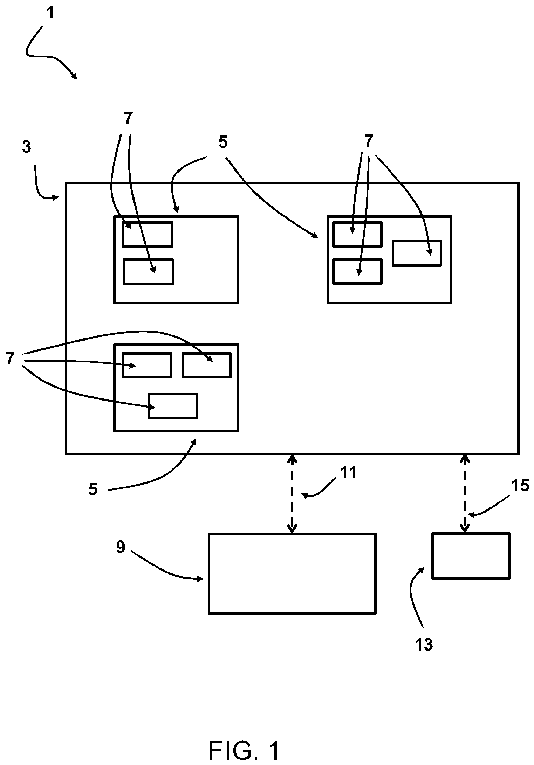

Fig. 1 shows a schematic diagram of a system 1 configured to manage different applications related to energy flexibility management. The system is cloud based system (providing cloud services). The system includes a platform 3 configured to store and concurrently execute a plurality of applications 5 related to energy management, wherein each application 5 of the plurality of applications comprises one or more modules 7 for processing data. The system 1 further includes a data store 9 communicatively coupled to the platform. In this example, the communication is achieved by a communication line 11. However, the data store 9 may also be integrated in the platform 3. Hence, in some examples, the platform 3 includes the data store 9. Furthermore, each of the plurality of applications 5 has access to the data store 9, wherein the data store 9 is configured to store data which the plurality of applications 5 use for operation. The system further includes a configuration unit 13 communicatively coupled to the platform 3 and configured to enable configuration of parameters of the plurality of applications 5. In this example the configuration unit 13 is communicatively coupled to the platform 3 by means of a communication line 15. However, it is also possible that the configuration unit 13 is integrated in the platform 3. Further, the data store 9 is configured to store non-shared data used by different applications of the plurality of applications 5, the non-shared data being accessible by only a single application of the plurality of applications 5, and shared data accessible by at least a first application and at least one further application of the plurality of applications 5 belonging to a same environment as the first application. The environment may be associated to a group, for instance linked to a physical space (e.g. room, building, etc.) or physical environment (e.g. city, group of buildings, industrial site, district, streets, shopping center, etc.).

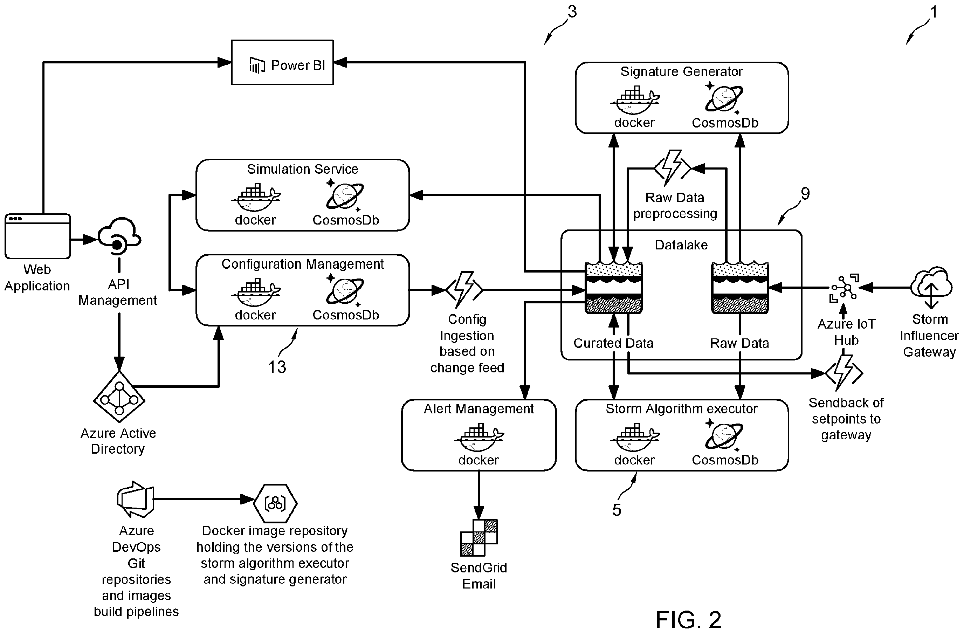

Fig. 2 shows a schematic diagram of an exemplary system 1. In this example, the data store 9 (or data lake) and configuration unit 13 are integrated in the platform 3. The exemplary architecture is based on Azure Kubernetes Services, and runs containers as microservices. In some examples, each microservice has its own database. The sensor data is stored in Azure data lake and the multi tenancy is achieved by data isolation in the data bases itself. By implementing true microservice architecture each subsystem is isolated from the other, and data isolation also is achieved.

In this example, a 'storm' controller application is used, such as for instance described in US 2019/0324411 A1. The 'storm' application is configured to manage an energy controller application. The energy controller application may be configured to take into account the thermal mass of building for energy flexibility management and demand response in heating networks. The controller may for instance employ artificial intelligence or machine learning modules. The platform can allow easy configuration of applications, for instance adjust data with respect to sensors, networks, buildings, data lake, dashboards, modules and algorithms. The platform may allow for the use of a template, which can reduce the implementation time for deployment of an application.

The system can run a different applications in parallel dedicated to different environments and/or regions (e.g. buildings). New environments can be easily added and managed by the platform. In some examples, the platform is configured to run in the cloud, using network communication to communicate with other parts and devices (e.g. via an intranet and/or the internet). The capacity and can be easily scaled in this way, so that the desired performance for the applications can be easily maintained. An exemplary cloud service on which the platform can run is Microsoft Azure. However, various other cloud services and cloud portals are also envisaged.

The platform may be configured to interact with an internet-of-things (IOT) HUB device (e.g. Microsoft IOT Hub). The IOT Hub device may be configured to enable communication of the application with various other devices, such as for instance connected gateways and sensors. In some examples, the IOT Hub device may be configured to provide subsystems for security (cf. firewall), authentication, communication, logging, encryption, data management, etc. The platform may allow operators to easily manage different spaces/environments (e.g. districts, buildings, ...).

In some examples the platform is configured to visualize the managed network. Also the different spaces (e.g. building, city, street, offices, etc.) can be visualized.

The 'storm' controller may be a retrofit external controller for controlling a system having devices consuming hot or cold thermal energy and for consuming or generating electric power supplied by an electricity distribution grid, the electricity distribution grid having constraints and target objectives, the constraints and target objectives being known to the retrofit external controller; at least one device having an internal controller for controlling the use of the hot or cold thermal energy and for receiving parameters as input to the internal controller wherein at least one parameter is accessible to the retrofit external controller; the retrofit external controller being adapted to manipulate the at least one parameter and to supply the manipulated parameter to the internal controller to alter the behaviour of the at least one device to meet at least in part the constraints and target objectives of the electricity distribution grid; wherein the at least one manipulated parameter is an accessible external data flow, an accessible external channel, or an accessible external sensor output whose manipulation steers the internal controller.

It will be appreciated that various other applications may be executed on the platform 3. For instance, the applications 5 may relate to for instance heating, temperature management, lighting, control of devices, car charging of electric vehicles, managing use of devices, etc.

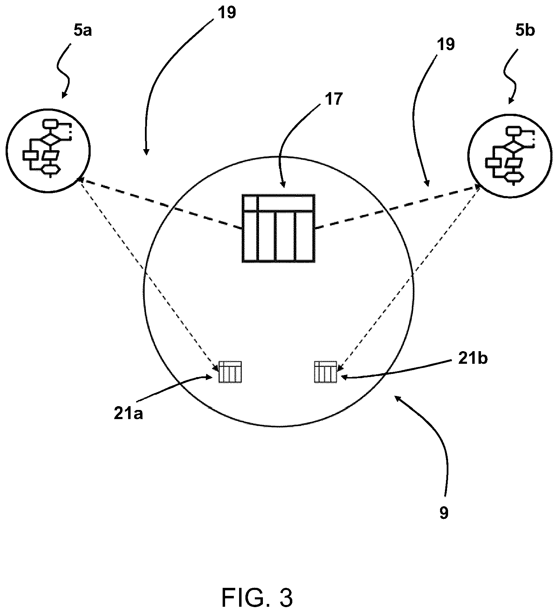

Fig. 3 shows a schematic diagram of a system 1. The system includes a platform 3 configured to store and concurrently execute a first application 5a, and a second application 5b, both related energy management. The two different applications 5a, 5b are communicatively coupled to the data store 9. The data store 9may be a central data lake of the system 1. Data sharing may be achieved in different ways. In this example, shared data 17 is accessible by at least a first application 5a and at least one further application (in this example the second application 5b) of the plurality of applications 5 belonging to a same environment as the first application 5a. The shared data 17 may be all kind of data, for instance calculated data, sensory data, operational data, etc. The data may for instance be timeseries data indicative of building energy consumption.

The platform 3 may include a communicative interface unit 19 for enabling communication of one or more modules of the first application 5a with one or more modules of at least one further application 5b of the plurality of applications 5 belonging to the same environment as the first application 5a. In this example, the communicative interface 19 is configured to provide a direct communication between the plurality of applications 5a, 5b and the data store 9. Data streams of the first and second applications 5a, 5b may be communicatively coupled through the data store 9. Advantageous, the interaction between different applications in the same environment can be improved. The first and second applications 5a, 5b may each generate an output 21a, 21b at least partially based on the shared data 17. The outputs 21a, 21b may be stored in the data store 9 and accessible by applications 5 belonging to the same environment.

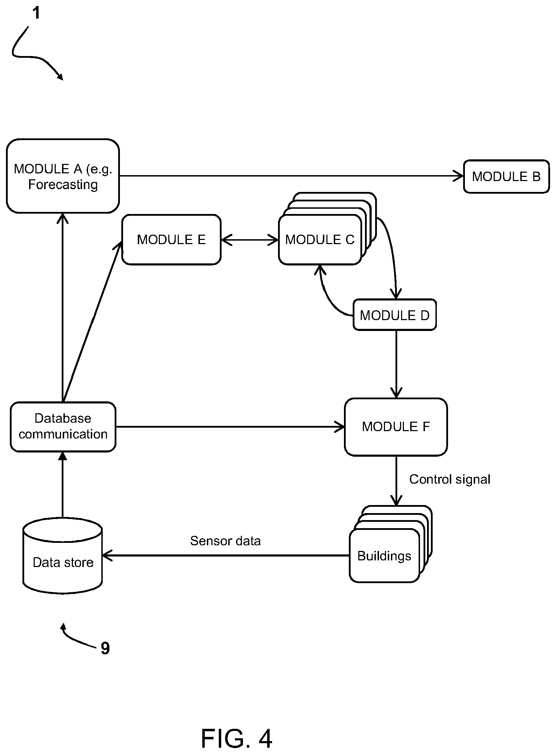

Fig. 4 shows a schematic diagram of an exemplary system 1. The data store 9 (cf. data lake) is accessible by different applications running concurrently on the platform 3. In this example, building data is stored in the data store 9. The building data is communicated to a forecaster, building models, building agent, and an energy signature applications. The different applications run in parallel on the platform 3 and communicate with each other to achieve control of various energy control parameters of multiple (grouped) buildings (cf. same environment).

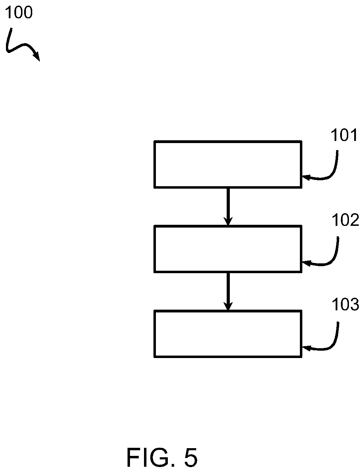

Fig. 5 shows a schematic diagram of a computer-implemented method 100 for managing different applications related to energy management using cloud services. In a first step 101, a platform is provided for storing and concurrently executing a plurality of applications related to energy management, wherein each application of the plurality of applications comprises one or more modules for processing data. In a second step 102, a data store is provided communicatively coupled to the platform wherein each of the plurality of applications has access to the data store, wherein the data store is configured to store data which the plurality of applications use for operation. In a third step 103, a configuration unit is provided configured communicatively coupled to the platform and configured to enable configuration of parameters of the plurality of applications. The data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

It will be appreciated that the term "coupled" is used to indicate that two or more elements co-operate or interact with each other, but they may or may not have intervening components or units between them. In the specification, when describing that any portion is "connected" to another portion, this connection includes not only "direct connection" but also "indirect connection" by which both portions are connected via another element.

As used in the claims, unless otherwise specified the use of the ordinal adjectives "first", "second", "third", etc., to describe a common element, merely indicate that different instances of like elements are being referred to, and are not intended to imply that the elements so described must be in a given sequence, either temporally, spatially, in ranking, or in any other manner.

Whereas the terms "one or more" or "at least one", such as one or more or at least one applications of a group of applications, is clear per se, by means of further exemplification, the term encompasses inter alia a reference to any one of said applications, or to any two or more of said applications, such as, e.g., any 2, 3, 4, 5, >6 or >7 etc. of said applications, and up to all applications.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A system for managing different applications related to energy flexibility management using cloud services, wherein the system includes:
a platform configured to store and concurrently execute a plurality of applications related to energy management, wherein each application of the plurality of applications comprises one or more modules for processing data,
a data store communicatively coupled to the platform wherein each of the plurality of applications has access to the data store, wherein the data store is configured to store data which the plurality of applications use for operation,
a configuration unit communicatively coupled to the platform and configured to enable configuration of parameters of the plurality of applications,
wherein the data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

2. The system according to claim 1, wherein the platform includes a communicative interface unit for enabling communication of one or more modules of the first application with one or more modules of at least one further application of the plurality of applications belonging to the same environment as the first application.

3. The system according to claim 2, wherein the communicative interface is configured to provide a direct communication between the plurality of applications and the data store.

4. The system according to claim 1, 2 or 3, wherein at least a first module of the first application is accessible by the at least one further application of the plurality of applications belonging to the same environment as the first application.

5. The system according to any one of the preceding claims, wherein modules of the plurality of applications define data streams, wherein a first data stream of the first application is accessible by the at least one further application of the plurality of applications belonging to the same environment as the first application.

6. The system according to any one of the preceding claims, wherein at least the first application and the at least one further application of the plurality of applications belonging to the same environment as the first application have communicatively coupled data streams.

7. The system according to claim 6, wherein the data streams are communicatively coupled through the data store.

8. The system according to any one of the claim 4-7, wherein the first module of the first application is re-usable by the at least one further application of the plurality of applications belonging to the same environment as the first application.

9. The system according to any one of the preceding claims, wherein the system comprises a data management unit coupled to the data store, wherein the data management unit is configured to process data access requests from the plurality of applications based on data management contracts associated to each of the plurality of applications.

10. The system according to any one of the preceding claims, wherein the data store is configured to provide concurrent access of each of the plurality of applications to data stored therein.

11. The system according to any one of the preceding claims, wherein the data store is integrated in the platform.

12. The system according to any one of the preceding claims, wherein the configuration unit is configured to provide a user interface enabling users to configure parameters of at least a subset of the plurality of applications.

13. The system according to any one of the preceding claims, wherein the applications related to energy flexibility management concern at least one of: a heating, ventilation, and/or air conditioning application, a temperature management application, a lighting application, a control of electronic and/or electric devices application, a control of storage devices application, a charging of electric vehicles application, an energy conversion application, a thermal energy storage application, or an electrical energy storage application.

14. A computer-implemented method for managing different applications related to energy management using cloud services, wherein the method comprises:
providing a platform for storing and concurrently executing a plurality of applications related to energy management, wherein each application of the plurality of applications comprises one or more modules for processing data,
providing a data store communicatively coupled to the platform wherein each of the plurality of applications has access to the data store, wherein the data store is configured to store data which the plurality of applications use for operation,
providing a configuration unit configured communicatively coupled to the platform and configured to enable configuration of parameters of the plurality of applications, wherein the data store is configured to store non-shared data used by different applications of the plurality of applications, the non-shared data being accessible by only a single application of the plurality of applications, and shared data accessible by at least a first application and at least one further application of the plurality of applications belonging to a same environment as the first application.

15. A non-transitory computer readable storage medium embodying a program executable in a computing device for provisioning cloud services in a cloud computing environment, the program comprising program code for carrying out the method according to claim 14.
